# EUROPEAN PATENT SPECIFICATION

(11) **EP 1 206 871 B1**
(45) Date of publication and mention of the grant of the patent: **19.10.2011**
(21) Application number: 00954921.3
(22) Date of filing: 23.08.2000
(51) Int. Cl.: H04M 1/725, H04M 1/80, H04M 1/57, H04M 19/04

(54) **TELEPHONE TERMINAL APPARATUS AND COMMUNICATION METHOD**
TELEFONENDGERÄT UND ÜBERTRAGUNGSVERFAHREN
TERMINAL T L PHONIQUE ET TECHNIQUE DE COMMUNICATION

(30) Priority: 24.08.1999 JP 23684899
(43) Date of publication of application: 22.05.2002
(73) Proprietor: YAMAHA CORPORATION, Hamamatsu-shi Shizuoka-ken (JP)
(72) Inventor: TANAKA, Takahiro, Hamamatsu-shi, Shizuoka-ken 430-8650 (JP)
(74) Representative: Wagner, Karl H.
(86) International application number: PCT/JP2000/005635
(87) International publication number: WO 2001/015410

(56) References cited:
- EP-A- 0 933 917
- WO-A-99/00962
- PATENT ABSTRACTS OF JAPAN vol. 012, no. 461 (E-689), 5 December 1988 (1988-12-05) & JP 63 184447 A (NEC CORP), 29 July 1988 (1988-07-29)
- PATENT ABSTRACTS OF JAPAN vol. 1999, no. 09, 30 July 1999 (1999-07-30) & JP 11 112615 A (KOKUSAI ELECTRIC CO LTD), 23 April 1999 (1999-04-23)
- PATENT ABSTRACTS OF JAPAN vol. 1998, no. 13, 30 November 1998 (1998-11-30) & JP 10 229584 A (KENWOOD CORP), 25 August 1998 (1998-08-25)
- BREEDEN R L: "MEANINGFUL, TUNEFUL PAGER ALERT" MOTOROLA TECHNICAL DEVELOPMENTS,US,MOTOROLA INC. SCHAUMBURG, ILLINOIS, vol. 19, 1 June 1993 (1993-06-01), pages 41-42, XP000361466

## Description

### TECHNICAL FIELD

The present invention generally relates to a telephone terminal apparatus and a communication method for suitable use in an automobile telephone terminal and a portable telephone set terminal.

### BACKGROUND ART

When a call comes into a portable telephone set terminal in a portable telephone system such as a PDC (Personal Digital Cellular telecommunication system) known as an analog cellular telephone system or a digital cellular telephone system or a PHS (Personal Handyphone System), a ringing tone is sounded for telling the call termination to the user of that portable telephone set terminal. Conventionally, this ringing tone is a beep tone. However, because beep tones are sometimes offensive to the ear and for other reasons, melodious ringing tones have come to a wide use these days.

In the above-mentioned portable telephone set terminals, a melodious tone is sounded only at the time of call termination, not during a conversation, thereby sometimes making the conversation monotonous or awkward. WO 99 00962 A discloses a mobile telephone with an audio unit, comprising an HF transmitter and receiver section, a modulator/demodulator at least for the voice signals, a LF section, a control unit, an input unit and a voltage feed unit with a battery. Said mobile telephone can be joined to an audio unit to form one single device. The audio unit is designed to at least reproduce, and optionally record, audio signals by or in a storage medium. The mobile telephone and the audio unit can be connected electrically to carry out at least certain functions.

JP-A-63184447 discloses a telephone set equipped with a sound recording and reproducing circuit. To send a reproduced output from a sound recording and reproducing circuit as a background tone during calling by a transmitter a mixing circuit receiving a transmitter output and a sound recording and reproducing circuit output as inputs and outputting the result through mixture to a transmission circuit. A recording medium recorded with music or audio or the like is mounted to a recording and reproducing circuit and an output is given to a communication line via a mixing circuit. A switch switches the output of a transmitter to the reproduced output of the reproduction circuit to give an output to the mixture circuit when a reproduction request of the message comes from a visiting location. The mixing circuit has a mixing function for the voice from the transmitter and the voice from the reproducing circuit to adjust the sound volume to mix and output music or birdcall from the reproducing circuit in mixture while the conversation from the transmitter, for example, as the background tone. Thus, the reproduced output from the sound recording and reproducing circuit is sent as the background tone during the conversation by the transmitter.

JP-A-11112615 discloses a portable telephone set capable of extending its application for purposes other than speeches by adding a music function to the portable telephone set and enhancing the availability of the set that is always carried. An entry section enters music data consisting of beat data, tempo data and scale data and the data are displayed an a display section and stored in a storage section, then the entry section is used to read the scale data at a speed in matching with a tempo of the music data played from the storage section, and octave data and scale data are outputted to a temporary storage section and a sound source generating section receives the octave data and the scale data from the temporary storage section, converts them into audio signals and outputs them to a mixer. The mixer synthesizes the audio signal received from the sound source generating section with the voice signal of the opposite party received from a portable telephone set main body and the synthesis audio signal is outputted to a loudspeaker, and the loudspeaker sounds the sound in this portable telephone set.

JP-A-10229584 relates to mobile object communication equipment to prevent an accident by a communication operation while driving at the time of performing use as the portable telephone of a vehicle by sending out a response message after a call is automatically terminated, then sending out holding tones and attaining a communication standby state at the time of not performing any operations at the time of call termination. A response message generation part and a holding melody generation part output response message voice signals and holding melody signals respectively held in a memory by the control of a CPU. Also, a changeover switch selects the signals of one of the response message generation part, the holding melody generation part and a ringer circuit part, inputs them to a voice processing part, outputs them from a speaker and transmits the response message or the like to a communicating party side through a transmission/ reception circuit. Then, at the time of not performing any operations at the time of the call termination, after the call is automatically terminated, the response message is sent out, then the holding tones are sent out and the communication standby state is attained.

EP 0 933 917 A relates to a cellular phone with voice-programmed ringing melody. A portable cellular phone includes conversion means for converting a voice signal entered from a microphone into a digital audio signal; computation means which obtains musical scale information by extracting from the digital audio signal frequency components corresponding to a musical scale and which generates and outputs a musical scale signal from the musical scale information; and drive means for driving an audio output device on the basis of the musical scale signal. A user can input a desired musical scale without involving key operations.

Finally, reference may be had to Breeden, R. L. "Meaningful, tuneful pager alert", MOTOROLA TECHNICAL DEVELOPMENTS, US, Motorola Inc., Schaumburg, Illinois, vol. 49, June 1993, pages 41-42.

### DISCLOSURE OF THE INVENTION

It is therefore an object of the present invention to provide a telephone terminal apparatus and a communication method that can sound a background music tone during a conversation.

It is another object of the present invention to provide a telephone terminal apparatus that can sound a ringing tone and a holding tone by use of a background music tone generator.

In carrying out the invention and according to one aspect thereof, there is provided a telephone terminal apparatus operable to exchange forward and backward voice signals between a pair of parties for conversation as set forth in claim 1. In the telephone terminal apparatus, a voice processing block has a coder that codes a forward voice signal, and a decoder that decodes a backward voice signal. A communication block transmits the forward voice signal, which is outputted from the coder in a coded form, to the other party, and receives the backward voice signal from the other party in a coded form, which is inputted to the decoder. A tone generating block processes music data to generate a music tone signal. A controlling block operates when the music tone signal is set to sound a background music over the conversation for mixing the music tone signal generated by the tone generating block with the backward voice signal, which is outputted from the decoder, and for mixing the music tone signal generated by the tone generating block with the forward voice signal, which is inputted to the coder.

Preferably, the controlling block selects a background music according to a telephone number of the other party so as to control the tone generating block to generate a music tone signal of the selected background music.

Preferably, the controlling block operates when a conflict occurs in the setting of the background music between a calling party initiating the conversation and a called party for enabling the setting of the background music made by the calling party and disabling the setting of the background music made by the called party.

In accordance with the present invention the controlling block operates when the music tone signal is set to sound a ringing tone at a call termination for controlling the tone generator block to generate the music tone signal at the call termination. In such a case, the controlling block preferably selects a ringing tone in response to a telephone number of the other party to audibly identify the other party.

Expediently, the controlling block operates when the music tone signal is set to sound a holding tone for controlling the tone generating block to generate the music tone signal at a temporary holding of the conversation, and for feeding the generated music tone signal to the coder so as to transmit the holding tone to the other party. In such a case, the controlling block selects a holding tone according to a telephone number of the other party so as to control the tone generating block to generate the music tone signal of the selected holding tone.

Practically, the telephone terminal apparatus further comprises a memory block that stores the music data. In such a case, the communication block can download the music data into the memory block from an external database.

Practically, the controlling block can mute the music tone signal from either of the forward voice signal and the backward voice signal.

In carrying out the invention and according to another aspect thereof, there is provided a method of operating a telephone terminal to exchange forward and backward voice signals between a pair of parties for conversation as set forth in claim 9. The inventive method comprises the steps of coding a forward voice signal, and decoding a backward voice signal, transmitting the forward voice signal in a coded form to the other party, and receiving the backward voice signal from the other party in a coded form, processing music data to generate a music tone signal, and mixing the music tone signal with the backward voice signal after the decoding thereof when the music tone signal is set to sound a background music over the conversation, and mixing the music tone signal with the forward voice signal before the coding thereof when the music tone signal is set to sound a background music over the conversation.

According to the invention described above, when the portable telephone set is set so as to accompany a conversation with BGM (background music), a tone signal reproduced by a tone generator is mixed with a received backward voice signal for sounding. At the same time, a forward voice signal is mixed with a tone signal to be transmitted through a communication bock. Consequently, both the calling side and the called side can have a conversation while hearing a background music tone. This feature allows users to make telephone conversations livelier. Further, when a background tone suitable for a conversation is selected, a desired atmosphere of a conversation can be created.

In addition, by use of the music tone generator for reproducing a background tone, a ringing tone and a holding tone may be generated and outputted. The music tone generator may be used in common for generating the background tone, the ringing tone and the holding tone. Further, the music reproduced by the tone generator may be shared by the background tone, ringing tone, and holding tone. Still further, a memory block for storing music data is arranged such that the music data may be downloaded from an external personal computer and a network. This arrangement permits the reproduction of background tones, ringing tones, and holding tones in various types of music.

### BRIEF DESCRIPTION OF DRAWINGS

FIG. 1 is a schematic block diagram illustrating one embodiment of the invention in which a telephone terminal apparatus according to the invention is applied to a portable telephone set.
FIG. 2 is a block diagram illustrating an exemplary configuration of a music reproduction block and a voice processing block in the above-mentioned embodiment.
FIG. 3 is a schematic diagram illustrating downloading of music data into a portable telephone set when the inventive telephone terminal apparatus is applied to the portable telephone set.
FIG. 4 is a diagram illustrating an exemplary data structure of music data treated in the above-mentioned embodiment.
FIG. 5 is a flowchart for describing call origination processing in the portable telephone set to which the telephone terminal apparatus according to the invention is applied.
FIG. 6 is a flowchart for describing call termination processing in the portable telephone set to which the telephone terminal apparatus according to the invention is applied.
FIG. 7 is a flowchart for describing in-conversation processing to be executed in the call origination processing and the call termination processing in the portable telephone set to which the telephone terminal apparatus according to the invention is applied.
FIG. 8 is a flowchart for describing music setting process in the portable telephone set to which the telephone terminal apparatus according to the invention is applied.
FIG. 9 is a diagram illustrating an exemplary BGM music table used in association with telephone numbers in the above-mentioned embodiment.
FIG. 10 is a diagram illustrating music numbers and timbre numbers allocated to numeric keys of the portable telephone set to which the telephone terminal apparatus according to the invention is applied.
FIG. 11 is a flowchart for describing music data reproduction process in the portable telephone set to which the telephone terminal apparatus according to the invention is applied.

### BEST MODE FOR CARRYING OUT THE INVENTION

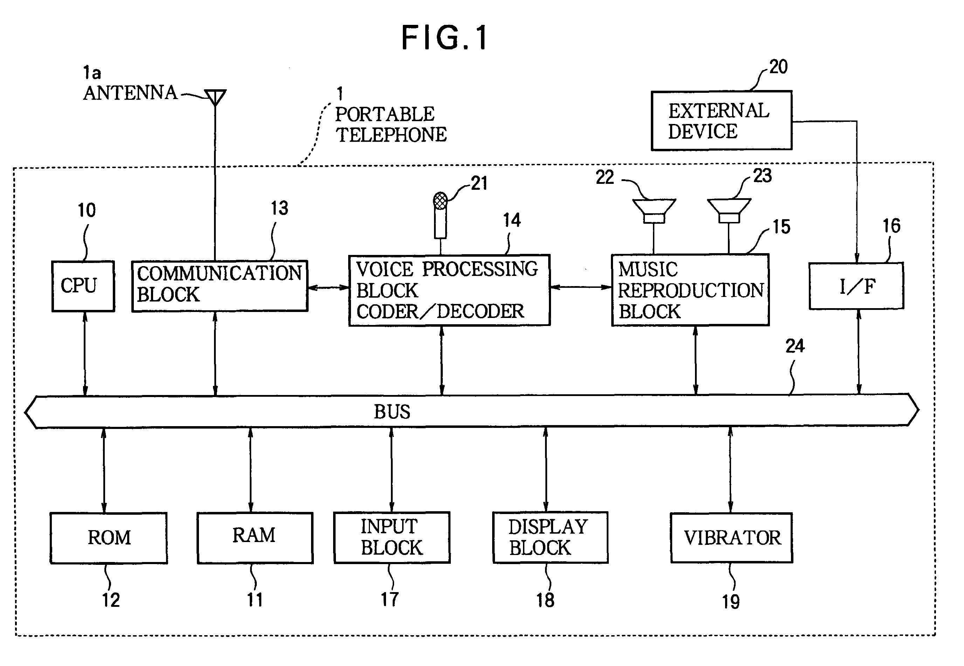

Referring to FIG. 1, there is shown an exemplary configuration of one embodiment in which a telephone terminal apparatus according to the present invention is applied to a portable telephone set. As shown in FIG. 1, a portable telephone set 1 has a retractable antenna 1a, which is connected to a communication block 13 having modulation and demodulation capabilities. A central processing unit (CPU) 10 is a system controller for controlling the components of the portable telephone set 1 by executing telephone function programs. The CPU 10 has a timer for indicating an elapsed time in operation and for causing a timer interrupt at a particular time interval. The system CPU 10 also supports music reproduction process or tone generating process. A system RAM (Random Access Memory) 11 provides storage areas for storing music data downloaded from a download center arranged in a general telephone network for example or downloaded from an external device 20. The RAM also stores user setting data, and provides a work area for the system CPU 10. A system ROM (Read Only Memory) 12 stores various telephone function programs such as call origination and termination programs to be executed by the system CPU 10, a program for supporting music reproduction processing, and various types of data such as preset music data. These programs can be provided by means of a machine readable medium such as a memory card, which is coupled to the telephone terminal set.

The communication block 13 demodulates a signal received at the antenna 1a and modulates a signal to be transmitted, sending the modulated signal from the antenna 1a. The received voice signal demodulated by the communication block 13 is decoded by a voice processing block 14 having a coder/decoder. A voice signal for transmission inputted from a microphone 21 is compressively encoded by the voice processing block 14. The voice processing block 14 executes highly efficient compressive encoding and decoding on the voice signal for transmission by means of the coder/decoder based on CELP (Code Excited LPc) or ADPCM (Adaptive Differential PCM). A music reproduction block 15 includes a tone generator and reproduces music data as a ringing tone and/or a holding tone or BGM used when the received voice signal from the voice processing block 14 is sounded from a speaker 22. It should be noted that the ringing tone is sounded from a ringing tone speaker 23 and the BGM and/or the holding tone is mixed with the received voice signal to be sounded from a conversation speaker 22.

If, during reproduction of music data by the music reproduction block 15, a free area of a predetermined size is created in an internally arranged music data storage area, the music reproduction block 15 sends a transfer request signal (Req) to the CPU 10, upon which the CPU 10 retrieves a continued portion of the music data stored in the system RAM 11 or the ROM 12 and transfers the retrieved data to the music reproduction block 15. An interface (I/F) 16 interfaces the downloading of music data for example from the external device 20 such as a personal computer. An input block 17 provides input means made up of numeric keys 0 through 9, code keys, a jog dial, and other controls. A display block 18 displays telephone function menus and information resulted from the operation of controls on the input block 17. A vibrator 19 vibrates the body of the portable telephone set 1 upon call termination to physically tell the user instead of sounding a ringing tone. These functional blocks transfer data and communicate with each other over a bus 24.

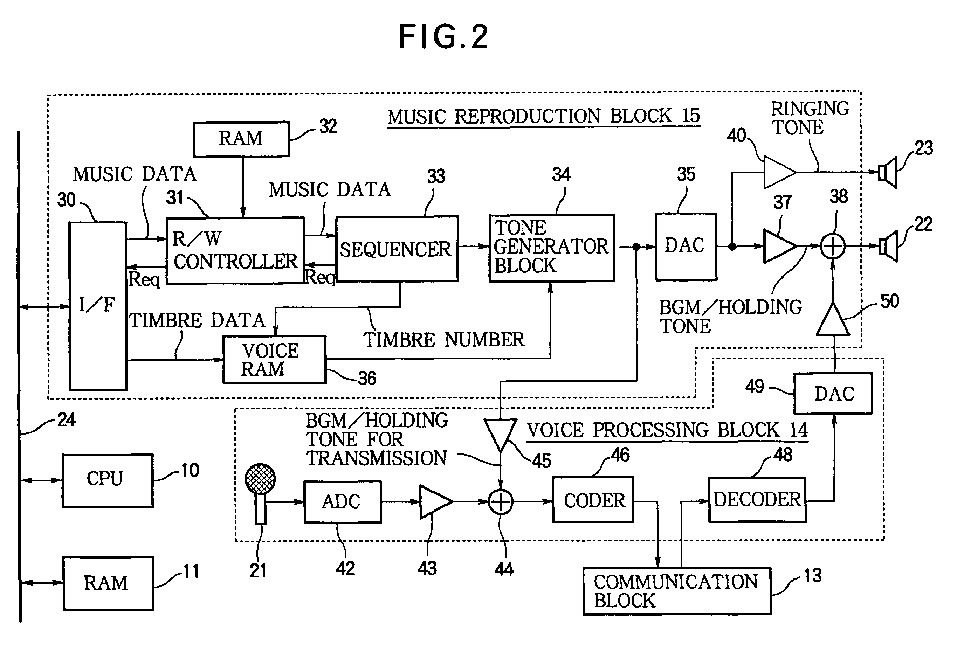

Referring to FIG. 2, there is shown an example of a detailed configuration of the music reproduction block 15 and the voice processing block 14 shown in FIG. 1. First, the configuration of the music reproduction block 15 will be described. In the music reproduction block 15 shown, an interface 30 transfers various types of data through the bus 24. At initialization of music data, music data other than timbre data are stored in a free area of a music data storage block (RAM) 32 under the control of a read/write controller (R/W controller) 31. The timbre data among the music data are stored in a timbre data storage block (Voice RAM) 36. The timbre data storage block (Voice RAM) 36 stores the timbre data supplied from the interface 30 and has a storage size large enough for storing eight timbres of timbre data for example. Also, at initialization of music data, a sequencer 33 interprets the music data, writes a timbre number specified for each part of a music piece to the timbre data storage block (Voice RAM) 36, reads a timbre parameter corresponding to the written timbre number from the timbre data storage block (Voice RAM) 36, and sets the retrieved timbre parameter to a tone generator block 34.

When the music reproduction starts, the R/W controller 31 operates in response to a request-to-read signal (Req) from the sequencer 33, and sequentially reads the music data from the music data storage block (RAM) 32 and supplies the retrieved music data to the sequencer 33. The storage size of the music data storage block (RAM) 32 is smaller than that required for storing the music data for one piece of music; for example, a storage size for storing 32 words of music data. The sequencer 33 sequentially receives the music data through the R/W controller 31, interprets the received music data, and sets a tone generator parameter corresponding to the music data to the tone generator block 34 so that the music data are sounded in a specified timed relation. The tone generator parameters include pitch data, a note-on signal, and a note-off signal for example.

The tone generator block 34 is capable of simultaneously sounding tone signals for four parts of one music piece for example. The timbre of the music signal of each part is set by the timbre data read from the timbre data storage block (Voice RAM) 34. According to this timbre and on the basis of the timbre parameter set by the sequencer 33, the tone generator block 34 generates a tone signal for each part. The generated tone signal for four parts is supplied to a digital-to-analog converter (DAC) 35 in a predetermined reproduction timing and is converted into an analog tone signal.

When the reading of music data from the music data storage block (RAM) 32 has progressed to leave a free area of a predetermined size in the music data storage block (RAM) 32, the R/W controller 31 sends a request-to-transfer signal (Req) to the bus 24 through the interface 30. The request-to-transfer signal (Req) is received by the CPU 10, which then retrieves a subsequent portion of the music data for a predetermined length, for example 16 words of music data corresponding to the free area, from the system RAM 11 for example, and which sends the retrieved music data to the bus 24. The retrieved music data are written into the free area in the music data storage block (RAM) 32 through the interface 30 under the control of the R/W controller 31. This operation is repeated. Consequently, even if the storage size of the music data storage block (RAM) 32 is smaller than that necessary for storing a whole piece of music, it can be reproduced continuously.

If the reproduced tone signal is sounded as a ringing tone, the coefficient of a coefficient multiplier 40 is set to 1 and the tone signal is sounded from the ringing tone speaker 23. If the reproduced tone signal is used as BGM, the coefficient of a coefficient multiplier 37 is set to 0.5 for example. The signal multiplied by this coefficient is mixed in a mixer 38 with a talking voice signal multiplied by a coefficient, 0.5 for example, of a coefficient multiplier 50, the mixed result being outputted from the conversation speaker 22. From the coefficient multiplier 50, the received voice signal decoded by the voice processing block 14 is outputted. The tone signal outputted from the tone generator 34 is supplied to the voice processing block 14 as a BGM signal to be transmitted.

Further, if the reproduced tone signal is used as a holding tone, the coefficient of the coefficient multiplier 37 is set to 1 and the holding tone is sounded from the conversation speaker 22 through the mixer 38. In this case, the coefficient of the coefficient multiplier 50 is set to 0, thereby preventing the received voice signal decoded by the voice processing block 14 from being outputted. Still further, the tone signal outputted from the tone generator block 34 is supplied to the voice processing block 14 as a holding tone signal for transmission. It should be noted that the coefficient of the coefficient multiplier 37 may be set to 0 to prevent the holding tone from being outputted from the conversation speaker 22.

The following describes the voice processing block 14. In the voice processing block 14 shown in FIG. 2, a talking voice signal for transmission inputted from the microphone 21 is converted by an analog-to-digital converter (ADC) 42 into a digital signal, which is supplied to a mixer 44 through a coefficient multiplier 43. The tone signal reproduced by the music reproduction block 15 is supplied to the mixer 44 through a coefficient multiplier 45. The output of the mixer 44 is compressively encoded in a highly efficient manner by a coder 46 of CELP (Code Excited LPC) scheme for example and is supplied to the communication block 13 for transmission from the antenna 1a. The received voice signal demodulated by the communication block 13 is decoded by a decoder 48 of CELP (Code Excited LPC) scheme for example from the highly efficient and compressive encoded form. The decoded signal is converted by a digital-to-analog converter (DAC) 49 into an analog signal, and is supplied to the music reproduction block 15.

If the tone signal reproduced by the music reproduction block 15 is set to provide BGM, the coefficients of the coefficient multiplier 43 and the coefficient multiplier 45 are set to 0.5 for example. The mixer 44 mixes the received voice signal outputted from the ADC 42 and the BGM signal for transmission supplied from the music reproduction block 15, the mixed result being sent through the coder 46 and the communication block 13 to a portable telephone set of the other party.

If the tone signal reproduced by the music reproduction block 15 is set to provide a holding tone, the coefficient of the coefficient multiplier 43 is set to 0 and the coefficient of the coefficient multiplier 45 is set to 1, thereby outputting from the mixer 44 only a holding tone signal for transmission supplied from the music reproduction block 15. The output of the mixer 44 is sent to the portable telephone set of the other party through the coder 46 and the communication block 13.

The following describes an operation for reproducing music data in the music reproduction block 15 and the voice processing block 14 shown in FIG. 2. Music data are reproduced either as a ringing tone, BGM, or a holding tone. In any case, the music data are initialized before starting of music reproduction. In the case of reproduction as a ringing tone, BGM, or a holding tone, the music data to be initialized are selected arbitrarily or selected uniquely from the telephone number information of the other party. The following description is made on the supposition that the selected music data are already stored in the system RAM 11 or the system ROM 12.

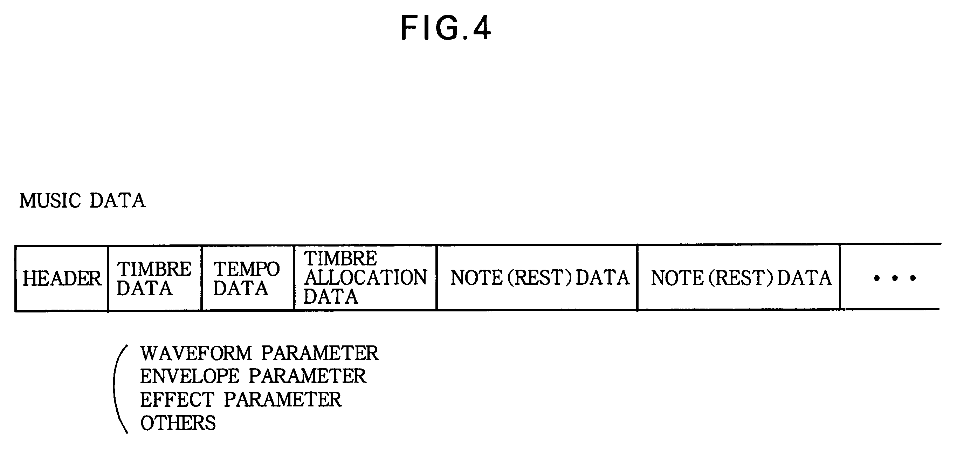

In the portable telephone set 1 shown in FIG. 1, the selected music data are read from the RAM 11 or the ROM 12 and sent to the music reproduction block 15 through the bus 24. One example of a data configuration of the music data is shown in FIG. 4. As shown in FIG. 4, the beginning of music data is a header, which is followed by timbre data necessary for reproducing the music data. The timbre data can specify eight timbres at most. The timbre data are followed by tempo data for defining a tempo at which the music data are reproduced. Next come timbre allocation data for setting a timbre for each part of the selected music piece. Lastly come musical note data and musical rest data for one piece of music.

The timbre data among the music data captured through the interface 30 are written to the timbre data storage block (Voice RAM) 36. The timbre data is composed of a waveform parameter, an envelope parameter, a modulation parameter, an effect parameter, and other parameters, each being unique to each timbre. The waveform parameter in each piece of timbre data defines a tone waveform of the timbre. For example, if the tone generator block 34 is composed of a wavetable-based PCM tone generator, the waveform parameter defines one of the waveforms listed in the wavetable. If the tone generator block 34 is composed of an FM tone generator, the waveform parameter specifies an algorithm for FM computation. The envelope parameter specifies attack rate, decay rate, sustain rate, and release rate of the music tone. The modulation parameter specifies depth and velocity of vibrato and tremolo. The effect parameter specifies reverberation, chorus, and variation for example.

The music data other than the timbre data captured through the interface 30 are stored in the music data storage block (RAM) 32 by the R/W controller 31. In this case, the first 32 bytes for example of music data are stored in the music data storage block (RAM) 32. In response to a request-to-read signal (Req) from the sequencer 33, the sequencer 33 captures the tempo data read by the R/W controller 31 from the music data storage block (RAM) 32 and sets a tempo accordingly. In addition, the sequencer 33 reads the timbre parameter specified by the captured timbre allocation data from the timbre data storage block (Voice RAM) 36 and sets the timbre parameter to the tone generator block 34. In this reading, the sequencer 33 supplies a timbre number specified for each part to the timbre data storage block 36 to set the timbre parameter of each part to the tone generator block 34. It should be noted that, because the timbre data constituting the selected music data are written to the timbre data storage block 36 (Voice RAM), the timbre data necessary for the reproduction of the music data concerned are all stored in the timbre data storage block (Voice RAM) 36.

When the selected music is reproduced, the musical note data and the musical rest data are read from the music data storage block (RAM) 32 according to the request-to-read signal (Req) given from the sequencer 33. One word of musical note data are composed of an octave code and a note code, the number of a part to which the musical note data belong, an interval, which is a duration of time up to a next note or rest, and the length of sounding. One word of musical rest data are composed of musical rest data indicative of rest type, the number of a part to which the musical rest data belong, and an interval, which is a duration of time up to a next note or rest.

When the sequencer 33 reproduces a tone, the musical note data and the musical rest data are sequentially read from the music data storage block (RAM) 32. The sequentially read musical note data are interpreted and a tone generator parameter corresponding to the musical note data is set to the tone generator block 34 so that the music data are sounded in the resultant timed relation of sounding. Thus, the tones corresponding to the musical note data are sequentially generated by the tone generator block 34 and the generated tones are outputted.

As the reproduction of music data progresses described above, a free area is yielded occurs in the music data storage block (RAM) 32 by that much. Because the music data storage block (RAM) 32 stores only the first 32 words of music data, next words of the music data are stored in that free area. Consequently, music data which are large in size can be reproduced for a whole piece of music continuously by sequentially storing the portions of the music data. A request-to-transfer signal (Req) to be outputted by the R/W controller 31 is generated when a free area for predetermined words is yielded in the music data storage block (RAM) 32, thereby requesting for the storage of the music data portion that follows the free area. Receiving this request-to-transfer signal (Req), the CPU 10 reads the music data portion from the system RAM 11 or the system ROM 12 and sends the music data portion to the music reproduction block 15. The R/W controller 31 of the music reproduction block 15 stores the received music data portion into the free area of the music data storage block (RAM) 32.

In this case, the free area in which a music data portion is stored by a request-to-transfer signal (Req) can be set to a desired size. If the free area is set to a size as small as close to zero word, the frequency of the occurrence of the free area increases but the load of the CPU 10 decreases because the number of words written decreases. On the contrary, setting the free area to a size as large as 32 words decreases the frequency of interrupt, while increasing the load of the CPU 10 because of the large number of words. Therefore, preferably, the size of the free area, for which a request-to-transfer signal (Req) is generated, is set to a level according to the performance of the CPU 10.

It should be noted that the sequencer 33 interprets the musical note data and sets a tone generator parameter composed of pitch data, note-on signal, and part specification information to the tone generator block 34 in a timed relation based on the tempo information and the interval information obtained by the interpretation. The tone generator block 34 generates a tone on the basis of the tone parameter set to a tone generator register and the timbre parameter set to a specified part. When the length of sounding of the musical note data has elapsed, the sequencer 33 sets a note-off signal for keying off that tone to the tone generator block 34. The tone generator block 34 executes mute processing on that tone. The above-mentioned processing is executed every time the music data are read from the music data storage block (RAM) 32, thereby outputting the tone signal from the tone generator block 34 to the DAC 35.

At reproduction, each part is set to a timbre allocated according to the timbre allocation data. Insertion of the timbre allocation data for each part into music data beforehand allows the sequencer 33, when it interprets the timbre allocation data, to supply the timbre number specified by the timbre allocation data to the timbre data storage block (Voice RAM) 36 during reproduction. In this case, the timbre data storage block (Voice RAM) 36 stores eight timbres of timbre data which are greater than the number of parts. Therefore, the timbre of each part may be set to any desired one of the eight timbres of timbre data. Namely, the timbre parameter corresponding to a timbre number is read from the timbre data storage block (Voice RAM) 36, and set to the tone generator register for the part specified by the timbre allocation data in the tone generator block 34. This changes the timbres of the tones of parts to be reproduced by the tone generator block 34 during reproduction.

Thus, the insertion of the timbre allocation data for each part into music data beforehand allows changing of the timbres of the parts during reproduction. Also, the user may select the eight timbres of timbre data to be stored in the timbre data storage block (Voice RAM) 36 from the timbre data stored in the system RAM 11, and may transfer the selected timbre data to the timbre data storage block (Voice RAM) 36. In this case, it is assumed that various types of timbre data have been downloaded into the system RAM 11 from a download center connected through a general telephone line or the external device 20.

In the case where the system is set so as to reproduce music as a ringing tone by the music reproduction block 15 upon termination of a call at the portable telephone set 1, the music reproduction processing starts upon the call termination. Then, the reproduced tone is sounded as a ringing tone from the ringing tone speaker 23 through the coefficient multiplier 37 of which coefficient is set to 1. In this case, the coefficient of the coefficient multiplier 37 is set to 0. Namely, the controlling block 10 or 31 operates when the music tone signal is set to sound a ringing tone at a call termination for controlling the tone generator block 34 to generate the music tone signal at the call termination.

It should be noted that the music to be produced as a ringing tone may be of the music piece that corresponds to the telephone number of the other party. To be specific, a ringing tone music table is prepared in the system RAM 11, the table listing music numbers and timbre numbers in corresponding to the telephone numbers of other parties. When a call comes in, the ringing tone music table is searched on the basis of the telephone number of the calling party received along with the incoming call signal. The retrieved music data including the corresponding timbre data are sent to the music reproduction block 15. Consequently, the tone of the music and timbre corresponding to the telephone number of the other party can be reproduced in the music reproduction block 15 as a ringing melody. Namely, the user can identify the other party by listening to the ringing melody sounded from the ringing tone speaker 23 before commencing conversation. In the inventive telephone terminal apparatus, the controlling block 10 selects a ringing tone in response to a telephone number of the other party to audibly identify the other party.

If the portable telephone set 1 is set so that music is reproduced in the music reproduction block 15 as a holding tone, the music reproduction processing starts when the portable telephone set 1 is placed in a holding state. The reproduced music is supplied to the mixer 38 through the coefficient multiplier 37 of which coefficient is set to 1. The mixer 38 is supplied with the received voice signal from the voice processing block 14. In this case, however, only the holding music tone is supplied to the mixer 38 because the coefficient of the coefficient multiplier 50 is set to 0. Therefore, only the music tone is outputted from the mixer 38 to be sounded from the conversation speaker 22 as a holding tone. Further, in this case, the coefficient of the coefficient multiplier 40 is set to 0.

At the same time, the tone signal outputted from the tone generator block 34 is processed for sending the holding tone to the telephone of the other party by supplying the same to the voice processing block 14. thus, this tone signal is supplied to the mixer 44 through the coefficient multiplier 45 of which coefficient is set to 1. Then, the tone signal outputted from the mixer 44 is highly efficiently and compressively encoded by the coder 46 for transmission through the communication block 13. In this case, the coefficient of the coefficient multiplier 43 is set to 0 and only the tone signal is supplied to the mixer 44. Namely, the controlling blocks 10 and 31 cooperate when the music tone signal is set to sound a holding tone for controlling the tone generating block 34 to generate the music tone signal at a temporary holding of the conversation, and for feeding the generated music tone signal to the coder 46 of the voice processing block 14 so as to transmit the holding tone to the other party.

It should be noted that the music sound to be reproduced as a holding tone may be of the music or timbre corresponding to the telephone number of the other party. To be specific, a holding tone music table is prepared in the system RAM 11, the table listing music numbers and timbre numbers in correspondence to the telephone numbers of other parties. When the portable telephone set is placed in a holding state, the holding tone music table is searched by the telephone number of the other party received along with an originating signal or a terminating signal. The obtained music data including corresponding timbre data are sent to the music reproduction block 15. Consequently, a tone of music and timbre corresponding to the telephone number of the other party can be reproduced in the music reproduction block 15. It should be noted that the holding tone music table may be identical to the ringing tone music table. As described, the controlling block 10 selects a holding tone according to a telephone number of the other party so as to control the tone generating block 34 to generate the music tone signal of the selected holding tone.

If the portable telephone set 1 is set so that music is reproduced in the music reproduction block 15 as BGM which is sounded during conversation, the above-mentioned music reproduction processing starts when the portable telephone set 1 is connected to the telephone of the other party. The reproduced tone is supplied to the mixer 38 through the coefficient multiplier 37 of which coefficient is set to 0.5. The mixer 38 is also supplied with the received voice signal from the voice processing block 14 through the coefficient multiplier 50 of which coefficient is set to 0.5. The music tone signal is mixed with the talking voice signal in the mixer 38 to be sounded from the conversation speaker 22. In this case, the coefficient of the coefficient multiplier 40 is set to 0.

At the same time, the music tone signal outputted from the tone generator block 34 is processed to send BGM to the telephone of the other party by supplying the music tone signal to the voice processing block 14. Thus, this tone signal is supplied to the mixer 44 through the coefficient multiplier 43 of which coefficient is set to 0.5. The mixer 44 is also supplied with the voice signal for transmission from the microphone 21 through the coefficient multiplier 43 of which coefficient is set to 0.5. The tone signal and the voice signal mixed in the mixer 44 are highly and efficiently compressed and encoded by the coder 46 to be sent through the communication block 13.

Namely, the inventive telephone terminal apparatus operates to exchange forward and backward voice signals between a pair of parties for conversation. In the inventive apparatus, the voice processing block 14 has a coder 46 that codes a forward voice signal, and the decoder 48 that decodes a backward voice signal. The communication block 13 transmits the forward voice signal, which is outputted from the coder 46 in a coded form, to the other party, and receives the backward voice signal from the other party in a coded form, which is inputted to the decoder 48. The tone generating block 34 processes music data to generate a music tone signal. The controlling block 10 operates when the music tone signal is set to sound a background music (BGM) over the conversation for mixing he music tone signal generated by the tone generating block 34 with the backward voice signal, which is outputted from the decoder 48, and for mixing the music tone signal generated by the tone generating block 34 with the forward voice signal, which is inputted to the coder 46. Further, the controlling block 10 may select a background music according to a telephone number of the other party so as to control the tone generating block 34 to generate a music tone signal of the selected background music in manner similar to the ringing tone and the holding tone.

If the portable telephone set 1 is set so as to add BGM when this telephone is the calling party, information indicative of supply of BGM is sent to the other party when the connection is established. By use of this information, the telephone of the other party executes the following processing. Namely, if the calling party gets preference over the called party, the setting of BGM on the called party is ignored according to the information. Namely, the controlling block or CPU 10 operates when a conflict occurs in the setting of the background music or BGM between a calling party initiating the conversation and a called party for enabling the setting of the background music made by the calling party and disabling the setting of the background music made by the called party.

On the other hand, if the called party gets preference or priority over the calling party, the information of supply of BGM is sent to the calling party according to the setting of adding BGM on the called party, thereby ignoring the setting of adding of BGM on the calling party. In this case, BGM set by the called party is sounded. If, at this time, the called party is not set for adding BGM, BGM according to the BGM setting on the calling party is sounded.

Music to be reproduced or generated as BGM may be set as desired. The music and timbre corresponding to the telephone of the other party may also be used. To be specific, a BGM music table is prepared in the system RAM 11, the table listing music numbers and timbre numbers for the telephone numbers of other parties. When the addition of BGM is set, the BGM music table is searched by the telephone number of the other party received along with an originating signal or a terminating signal. The obtained corresponding music data are sent to the music reproduction block 15 and the corresponding timbre data are supplied to the music reproduction block 15. Consequently, the tone of the music and timbre corresponding to the telephone of the other party can be reproduced in the music reproduction block 15. It should be noted that the BGM music table may be common to the holding tone music table or the ringing tone music table, or these tables may be consolidated to one table that is shared by these three capabilities.

The following describes a situation in which the telephone of the other party is placed in a holding state and an incoming holding tone is sent to the portable telephone. The incoming holding tone demodulated by the communication block 13 is decoded by the decoder 48 in the voice processing block 14 and the decoded tone is converted by the DAC 49 into an analog holding tone. The analog holding tone is then supplied to the music reproduction block 15, from which it is sent to the mixer 38 through the coefficient multiplier 50 of which coefficient is set to 1. Meanwhile, the mixer 38 is not supplied with a tone signal from the DAC 35. In this case, even if the reproduction of the tone signal is going on by the tone generating block 34, the coefficient of the coefficient multiplier 37 is set to 0, thereby supplying only the incoming holding tone to the mixer 38. Hence, only the incoming holding tone is outputted from the mixer 38, the incoming holding tone being sounded from the conversation speaker 22.

The following describes a situation in which a voice signal mixed with BGM is received from the telephone set of the other party. The voice signal mixed with BGM demodulated by the communication block 13 is decoded by the decoder 48 in the voice processing block 14. The decoded voice signal is then converted by the DAC 49 into a analog received voice signal. The analog received voice signal mixed with BGM is supplied to the music reproduction block 15, from which it is supplied to the mixer 38 through the coefficient multiplier 50 of which coefficient is set to 1. Meanwhile the mixer 38 is not supplied with a tone signal from the DAC 35. When the voice signal mixed with BGM is received, the information indicative of the supply of BGM has been received beforehand and the coefficient of the coefficient multiplier 37 is set to 0 despite the reproduction of the tone signal by the tone generator block 34, the mixer 38 being supplied only with the voice signal mixed with BGM, this signal being sounded from the conversation speaker 22. It should be noted that the communication method according to the present invention is executed when the addition of BGM is set between the telephone terminal apparatuses having the configuration of the above-mentioned portable telephone set 1.

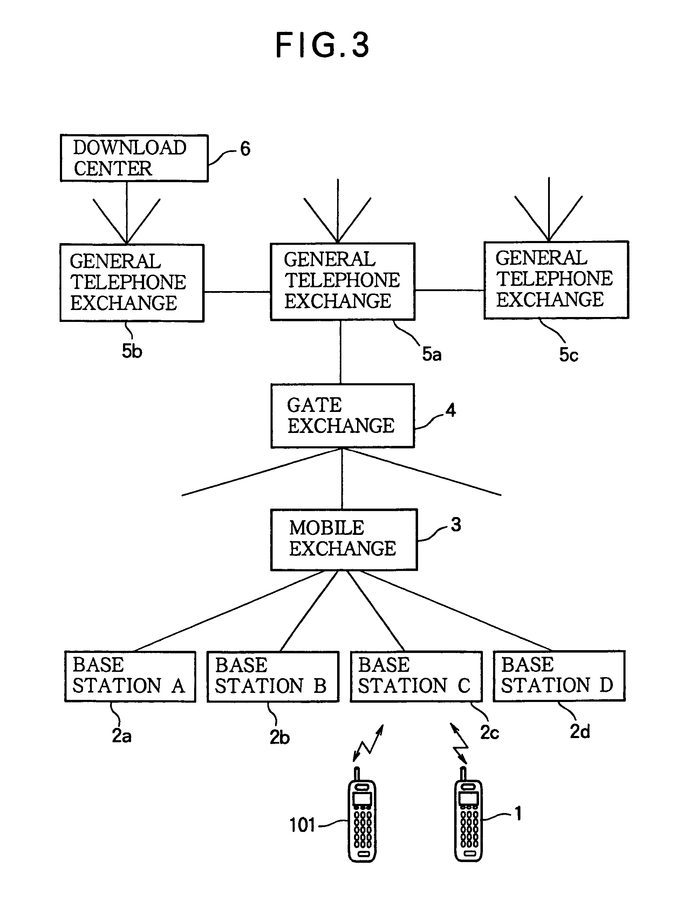

The telephone terminal apparatus according to the present invention is adapted to download music from the outside. One example of this is schematically illustrated in FIG. 3, in which music data are downloaded into the portable telephone set 1 when the telephone terminal apparatus associated with the invention is applied to the portable telephone set 1 shown in FIG. 1. Generally, the cellular system in portable telephony is based on a small zone called a cell and has many wireless zones in each service area. Each wireless zone is managed by a base station arranged in the zone. When a portable telephone, which is a mobile exchange, calls a general telephone, the portable telephone set is connected to a mobile exchange through the base station which manages the wireless zone to which the portable telephone set belongs. The portable telephone set is further connected from the mobile exchange to a general telephone network. Thus, the portable telephone set is connected to the base station that manages the wireless zone through a wireless channel for conversation with the other party. When the portable telephone set calls another portable telephone set that belongs to another wireless zone, the calling portable telephone set is connected to a mobile exchange through the base station which manages the wireless zone to which this portable telephone set belongs. The calling portable telephone set is further connected from the mobile exchange to a base station to which the called portable telephone set belongs.

FIG. 3 shows an example of the above-mentioned cellular system, in which portable telephone sets 1 and 101 belong to a wireless zone managed by a base station C (2c) among base stations A (2a) through D (2c). The portable telephones 1 and 101 are connected to the base station 2c in a wireless manner. Upstream signals for conversation and positional registration are received by the base station 2c and processed there. The base stations 2a through 2d each manage a different wireless zone. The wireless zones may overlap with each other in periphery or boarder. The base stations 2a through 2d are each connected to a mobile exchange 3 through a multiplex line. Two or more mobile exchanges 3 are concentrated in a gate exchange 4, which is connected to a general telephone exchange 5a. Two or more gate exchanges 4 are interconnected by a repeating transmission path. General telephone exchanges 5a, 5b, 5c, and so on are arranged each for an area, which are also interconnected by a repeating transmission path. Each of the general telephone exchanges 5a, 5b, 5c, and so on is connected with many general telephones. For example, a download center 6 is connected to the general telephone exchange 5b.

New music titles are periodically accumulated to the download center 6 from time to time, lot of music data being reserved therein. In the present invention, music data can be downloaded from the download center 6 connected to the general telephone network into the portable telephones 1 and 101 for example. In order for the portable telephone set 1 to download music data, the portable telephone set 1 originates the telephone number of the download center 6. The portable telephone set 1 is connected to the base station 2c, the mobile exchange 3, the gate exchange 4, the general telephone exchange 5a, the general telephone exchange 5b, and to the download center 6. Next, the user operates necessary controls on the portable telephone set 1 by following guidance displayed in the display block 18, thereby downloading the music data of a desired title. The music data in this case includes timbre data. Namely, the inventive telephone terminal apparatus includes a memory block that stores the music data. Then, the communication block 13 can download the music data into the memory block such as RAM 11 from an external database or the download center 6.

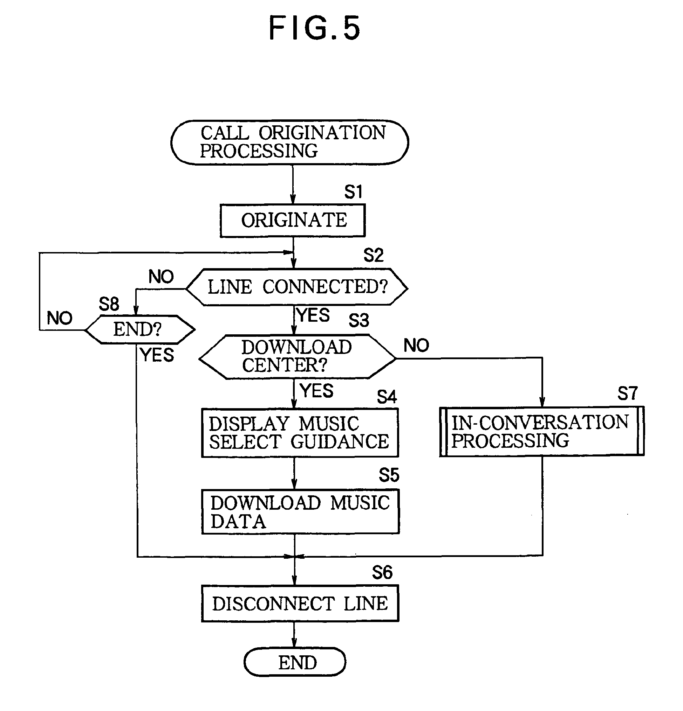

Referring to FIG. 5, there is shown a flowchart for describing the call origination processing to be executed by the CPU 10 of the portable telephone set 1 associated with the present invention. First, looking at the information displayed on the display block 18, the user operates necessary controls on the input block 17 to enter the telephone number of the other party and presses a transmit button (step S1). The entered telephone number is stored in the system RAM 11 and, at the same time, a call origination signal added with the information about the telephone number of the portable telephone set 1 is transmitted from the communication block 13 through the antenna 1a. This signal is received by the base station 2c to which this portable telephone set 1 belongs, the signal being then transmitted to the mobile exchange 3. From the telephone number of the called party, the mobile exchange 3 determines the general telephone exchange and the base station through which the connection to the called party is established, and transmits the call origination signal over the established transmission path. The origination signal arrives at the other party, upon which a ringing tone is sounded from the telephone of the other party. In step S2, the CPU 10 determines whether a receive button of the telephone of the other party has been operated (off-hook) for line connection. If the telephone of the other party is found not off-hooked, the CPU 10 branches to step S8 to determine whether a conversation end button of the telephone of the other party has been operated. If this button is found not operated, the CPU 10 returns to step S2 to determine whether the line has been connected. Unless the conversation end button is operated, the processing operations of steps S2 and S8 are repeated until the line is connected.

When the receive button of the telephone of the other party is operated for line connection, the decision is YES in step S2 and the CPU 10 goes to step S3 to determine whether the other party is the download center or not. If the other party is found the download center, then, in step S4, a music selection guidance supplied from the download center is displayed on the display block 18, upon which the user selects music by use of a singer list and a genre list by following to the guidance. In step S5, the selected music data are downloaded from the download center into the system RAM 11. As shown in FIG. 4, the beginning of the music data is a header, followed by timbre data necessary for reproducing the downloaded music data. The timbre data can specify eight timbres at most. The timbre data are followed by tempo data for defining a tempo at which the music data are reproduced. The tempo data are followed by timbre allocation data for setting a timbre to each part of a music piece. The timbre allocation data are followed by musical note data and musical rest data for one piece of music.

When the download processing has been completed, the line is disconnected in step S6, upon which the call origination processing comes to an end. If the other party is found not the download center in step S3, the CPU 10 branches to step S7 to execute in-conversation processing. When the conversation comes to an end, the line is disconnected in step S6, upon which the call origination processing comes to an end. If the conversation end button is found operated in step S8, the line is also disconnected in step S6, upon which the call origination processing comes to an end.

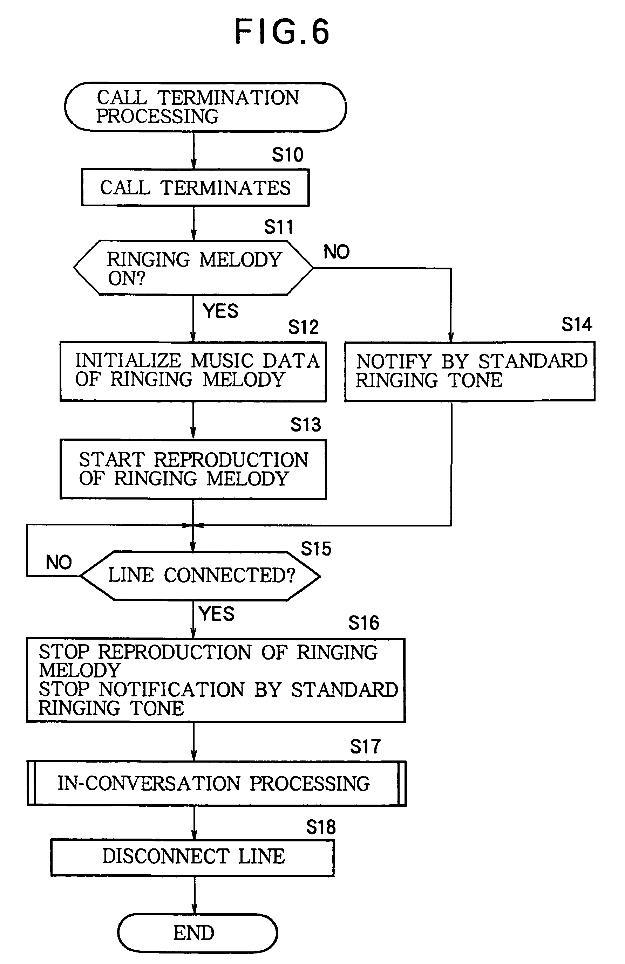

Referring to FIG. 6, there is shown a flowchart for describing call termination processing to be executed by the system CPU 10 of the portable telephone set 1 associated with the invention. The call termination processing starts upon reception of a terminating signal. In step S10, the reception of a terminating signal is detected and the information about the telephone number sent from the calling party is stored in the RAM 11. In step S11, the CPU 10 determines whether the sounding of melodious ringing tone is set for sounding the tone reproduced by the music reproduction block 15 as a ringing tone. If this setting is found on, the CPU 10 goes to step S12 to initialize the music data for a melodious ringing tone. In this initialization processing, the music data set as a ringing tone are read from the system RAM 11 or the system ROM 12 and supplied to the music reproduction block 15. In the music reproduction block 15, the timbre data included in the music data are stored in the timbre data storage block (Voice RAM) 36. The sequencer 33 interprets the timbre allocation data to read the timbre parameter for each part of music from the timbre data storage block (Voice RAM) 36, and sets the timbre parameter to the tone generator block 34. At the same time, the tempo data are set to the sequencer 33. It should be noted that the ringing tone music table may be searched by the telephone number information supplied from the calling party to select the music data for ringing tone.

When the initialization processing has been completed, the reproduction of melodious ringing tone starts in step S13. The tone of each part on the basis of the tone generator parameter given by the sequencer 33 is reproduced by the tone generator block 34 as a ringing tone, the reproduced tone being sounded from the ringing tone speaker 23. If the setting for melodious ringing tone is found off in step S11, the CPU 10 goes to step S14 to execute standard call termination notice processing by which a standard ringing tone such as beep is reproduced by the tone generator and sounded from the ringing tone speaker 23. In the standard call termination notice processing, the vibrator 19 may be activated instead of sounding a standard ringing tone. When the receive button is operated upon sounding of a ringing tone after the execution of the processing operations of steps S13 and S14, the CPU 10 determines that the line has been connected and goes to step S16. The processing operation of step S15 is repeated until the receive button is operated, during which the ringing tone is kept sounding. In step S16, the melodious ringing tone or the standard ringing tone being sounded is stopped. To be specific, the reproduction by the music reproduction block 15 is stopped and the coefficient of the coefficient multiplier 40 is set to 0. In step S17, the in-conversation processing in the called party is executed. When the conversation comes to an end, the line is disconnected in step S18, upon which the call termination processing comes to an end.

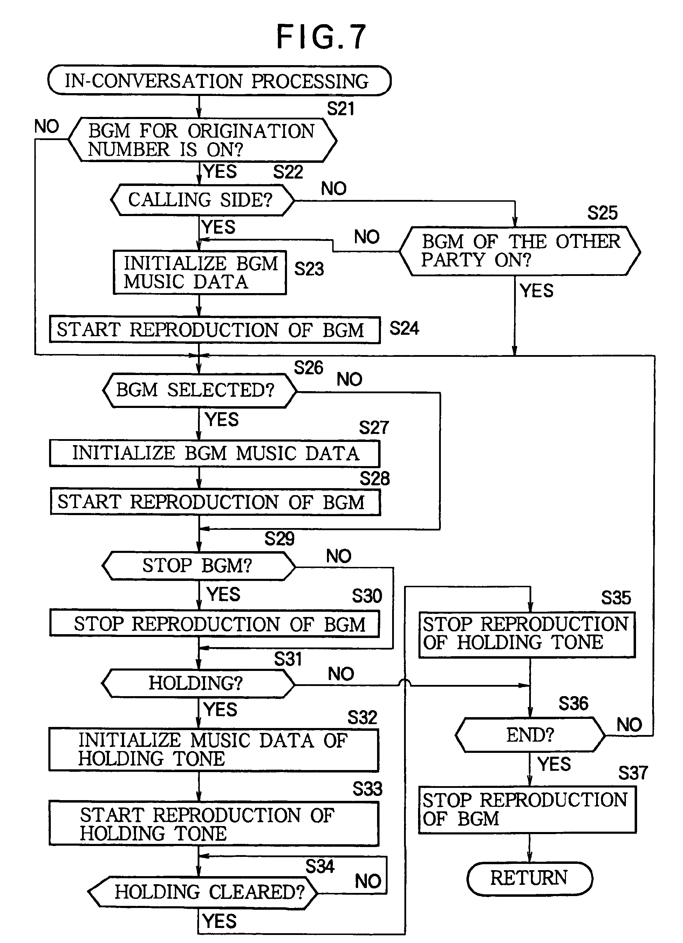

The following describes in-conversation processing to be executed in step S7 of the call origination processing or step S17 of the call termination processing with reference to a flowchart shown in FIG. 7. It should be noted that, with respect to the setting of BGM, the calling side is preferred over the called side. When in-conversation processing starts, the CPU 10 determines in step S21 whether the reference to the BGM table is set, the BGM table listing music data and timbre data corresponding to the originating number when reproducing BGM in step S21. If the reference is found on, the CPU 10 goes to step S22 to determine whether the setting is on the calling side.

If the setting is found on the calling side, the decision is YES in step S22. Then, in step S23, the BGM music table is searched by the telephone number of the other party. The selected BGM music data are initialized. In this initialization processing, the music data selected by searching the BGM music table are read from the system RAM 11 or the system ROM 12 into the music reproduction block 15. In the music reproduction block 15, the timbre data included in the music data are loaded in the timbre data storage block (Voice RAM) 36. The sequencer 33 interprets the timbre allocation data to read the timbre parameter for each part of music from the timbre data storage block (Voice RAM) 36, and set the timbre parameter to the tone generator block 34. At the same time, tempo data are set to the sequencer 33.

When the initialization processing has been completed, the reproduction of the selected music data for BGM starts in step S24. The tone generator block 34 reproduces the tone signal of each part based on the tone generator parameter and the timbre parameter given by the sequencer 33 on the basis of the music data for BGM read from the music data storage block (RAM) 32. The reproduced music data for BGM are mixed with the received voice signal and sounded from the conversation speaker 22 while being mixed with the voice signal for transmission to be transmitted to the telephone of the terminating side. Then, the CPU 10 goes to step S26.

If the setting is found not on the calling side, the CPU 10 branches to step S25 to determine whether the addition of BGM is set on the other party, or the calling side. The decision is YES when the information indicative of the supply of BGM has been received from the calling side after the establishment of line connection and the CPU goes to step S26. If this information has not been received, the CPU 10 branches to step S23, executing the above-mentioned BGM music data initialization processing and the BGM reproduction start processing (step S24) on the called side. In this case, BGM is not set on the calling side and the called side is set to search the BGM music table. Therefore, a tone signal for BGM selected by searching the BGM music table is reproduced on the called side and the reproduced tone signal is mixed with the voice signal for transmission to be transmitted to the telephone of the calling party. If the searching of the BGM music table is found not on in step S21, the CPU 10 goes to step S26 by skipping steps S22 through S25.

The processing operations of steps S26 through S28 are executed for setting BGM during conversation. If the setting is on the called side, the addition of BGM is not set on the calling side. When the user selects the setting of BGM by operating numeric keys and jog dial on the input block 17, the decision is YES in step S26. The CPU 10 goes to step S27. If the setting is on the calling side, when the operator selects the BGM setting by operating numeric keys and jog dial on the input block 17, the decision is YES in step S26. The CPU 10 goes to step S27. In step S27, the CPU 10 initializes the music data for BGM selected by the user. In this initialization processing, the music data selected as BGM are read from the system RAM 11 or the system ROM 12 into the music reproduction block 15. In the music reproduction block 15, the timbre data included in the music data are stored in the timbre data storage block (Voice RAM) 36. The sequencer 33 interprets the timbre allocation data to read the timbre parameter for each part from the timbre data storage block (Voice RAM) 36 and set the timbre parameter to the tone generator block 34. At the same time, tempo data are set to the sequencer 33. When this initialization processing has been completed, the reproduction of the music data for BGM starts in step S28. The tone generator block 34 reproduces a tone signal for each part based on the tone generator parameter and timbre parameter given by the sequencer 33 on the basis of the music data for BGM read from the music data storage block (RAM) 32. The reproduced BGM tone signal is mixed with the voice signal for transmission to be transmitted to the telephone of the other party. This allows the user to select or change music to be reproduced as BGM during conversation.

If it is found in step S26 that BGM setting is made or BGM setting is not selected on the calling side, and, when the processing of step S28 has come to an end, the CPU 10 goes to step S29 to determine whether the operation for stopping BGM has been executed if BGM has been set by operating numeric keys and jog dial on the input block. If this operation is found executed, then the reproduction of the music data for BGM in the music reproduction block 15 is stopped in step S30. When the processing of step S30 ) has been completed and if the operation for stopping BGM is not commanded in step S29, the CPU goes to step S31. As described, the controlling block or CPU 10 can mute the music tone signal from either of the forward voice signal and the backward voice signal.

The processing operations of steps S31 through S35 are executed for holding processing. When the hold button is pressed, the CPU 10 determines at step S31 that the call is in a holding state and goes to step S32 to initialize the holding tone music selected beforehand as a holding tone. Alternatively, the holding tone music data may be selected by searching the holding tone music table by the telephone number information supplied from the calling side.

In the above-mentioned initialization processing, the music data selected as a holding tone are read from the system RAM 11 or the system ROM 12 into the music reproduction block 15. In the music reproduction block 15, the timbre data included in the music data are loaded in the timbre data storage block (Voice RAM) 36. The sequencer 33 interprets the timbre allocation data to read the timbre parameter for each part from the timbre data storage block (Voice RAM) 36, and set the timbre parameter to the tone generator block 34. At the same time, tempo data are set to the sequencer 33. When this initialization processing has been completed, the reproduction of the music data for a holding tone starts in step S33. The tone generator block 34 reproduces the tone signal for each part on the basis of the tone generator parameter given by the sequencer 33 on the basis of the music data for a holding read from the music data storage block (RAM) 32. The reproduced holding music tone signal is sounded from the conversation speaker 22 and, at the same time, transmitted to the telephone of the calling side.

When the holding tone processing of step S33 has been completed, the CPU 10 goes to step S34 to wait for a hold clear button to be pressed. When the hold clear button is pressed, the CPU 10 goes to step S35 to stop the reproduction of the holding tone music data in the music reproduction block 15. When the processing of step S35 has been completed and if the hold clear button is found not operated in step S31, then the CPU 10 goes to step S36. In step S36, the CPU 10 determines whether a conversation end button has been operated. If the conversation end button is found operated, then the CPU 10 goes to step S37. If the reproduction of BGM is going on, the CPU 10 stops the reproduction of the BGM music data in the music reproduction block 15. Then, the CPU 10 returns to step S6 of the call origination processing or step S18 of the call termination processing to disconnect the line. If the conversation end button is found in step S36 not operated, the CPU 10 repeats the processing operations of steps S26 through S35 until the conversation end button is pressed.

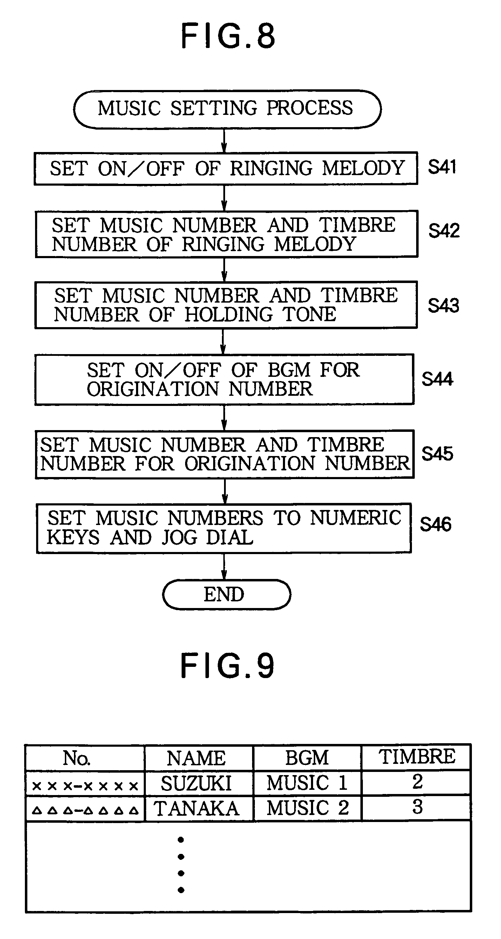

Referring to FIG. 8, there is shown a flowchart for describing music setting process to be executed by the CPU 10 in the portable telephone set 1 associated with the present invention. When the user operates numeric keys and jog dial on the input block 17 to enter a music setting mode, music setting process starts. In step S41, the user can set whether to sound a tone signal reproduced by the music reproduction block 15 as a melodious ringing tone or not. When the user selects this setting, a melodious ringing tone is found on in step S11 of the call termination processing. When the processing of step S41 has been completed, the CPU 10 goes to step S42 to set the music number and timbre number of the music for a melodious ringing tone. These music number and timbre number may be selected as desired from the system RAM 11 or the system ROM 12. Then, the music data corresponding to the music number and timbre number selected in this setting process are initialized in the music reproduction block 15 in step S12 of the call termination processing.

Next, in step S43, the music number and timbre number of the music to be reproduced as a holding tone may be set as desired. These music number and timbre number may be selected as desired from the system RAM 11 or the system ROM 12. The music data corresponding to these music number and timbre number set in this setting process are initialized in the music reproduction block 15 in step S32 of the in-conversation processing. Then, in step S44, setting process may be executed in which the BGM music table is searched to determine whether to make setting of selecting the music number and timbre number of BGM in correspondence to the call origination number. If this setting is made, the CPU 10 determines that BGM corresponding to the call origination number is on. Further, in step S45, the music number and timbre number corresponding to the call origination number may be set as desired. These music number and timbre number may be selected as desired from the system RAM 11 or the system ROM 12.

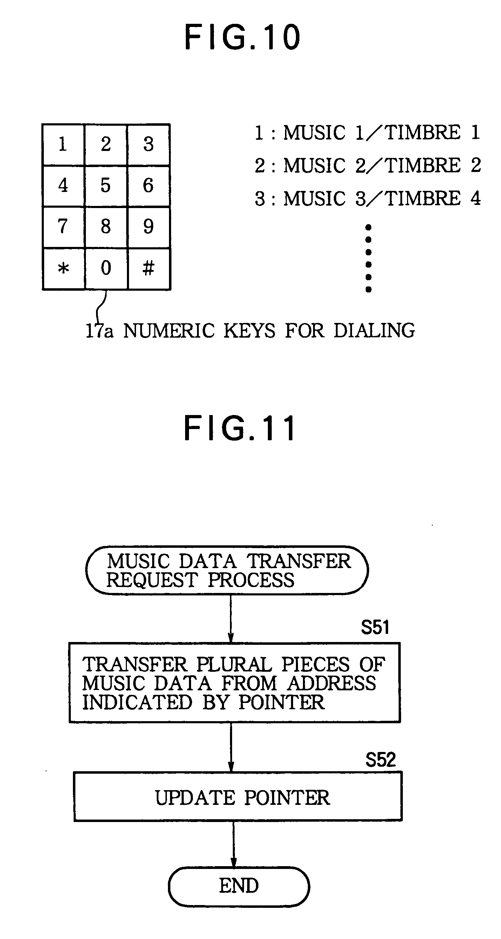

A table composed of the music numbers and timbre numbers corresponding to the call origination number set in step S45 lists call origination numbers (No), names of their owners, and allocated music numbers and timbre numbers as shown in FIG. 9. The music table shown in FIG. 9 is one example of the BGM music table. The ringing tone music table and the holding tone music table may be set separately. These music tables may be set as separate tables. Alternatively, one of these music tables may be set as a common music table. Further, in step S46, music numbers and timbre numbers may be allocated to numeric keys and job dial. FIG. 10 shows an example of the allocation to numeric keys. Namely, music numbers and timbre numbers may be allocated to the numeric keys 0 through 9 of dialing numeric keys 17a and code keys "*" and "#". The music numbers and timbre numbers set to the numeric keys can be selected when any of keys is operated in step S26 of the in-conversation processing.

Referring to FIG. 11, there is shown a flowchart for describing music data transfer request processing to be executed by the system CPU 10 on the basis of a request-to-transfer signal (Req) generated by the R/W controller 31 when a free area for the predetermined number of words is created in the music data storage block (RAM) 32. When a request-to-transfer signal (Req) is generated, the system CPU 10 receives it and reads music data for the predetermined number of words corresponding to the free area with an address indicated by a pointer as the origin, from the system RAM 11 (or the system ROM 12). Then the CPU 10 transfers the music data thus read to the music reproduction block 15 (step S51). The R/W controller 31 write the transferred music data to the music data storage block (RAM) 32. Next, in step S52, the pointer is updated to a new address reached by the number of transferred words, upon which the music data transfer request processing comes to an end. When another request-to-transfer signal (Req) is generated, the above-mentioned transfer processing is repeatedly executed on the basis of the updated pointer.

In the above-mentioned configuration, the music data storage block (RAM) 31 has a size for storing 32 words of music data. It will be apparent that the size is not limited to 32 words; the music data storage block may be of any size as far as it is significantly smaller than the size of the system RAM 11. In the above-mentioned configuration, the timbre data storage block (Voice RAM) 36 has a size for storing eight timbres of timbre data. It will be apparent that the size is not limited to eight timbres; this size may be significantly smaller than that of the system RAM 11 as far as it can store the number timbres at least greater than the number of sounding parts of the music piece.

For the sound source scheme of the tone generator block 34 in the music reproduction block associated with the present invention, any of FM, waveform memory (PCM), physical model schemes may be used. The sound source may be either hardware based on DSP or software based on a sound source program.

In the above-mentioned configuration, the music data have a format shown in FIG. 4. It will be apparent that the format of the music data is not limited to the above-mentioned format; MIDI format and SMF (Standard MIDI File) format with time information added may also be used.

In the above-mentioned configuration, the coefficients of the coefficient multipliers 37 and 50 for mixing BGM with a received voice signal and the coefficients of the coefficient multipliers 43 and 45 for mixing BGM with a voice signal for transmission are each set to 0.5. It will be apparent that these coefficients may be set to other values.

### INDUSTRIAL APPLICABILITY

As mentioned above and according to the invention, when the portable telephone set according to the invention is set so as to accompany a conversation with BGM (background music), a tone signal reproduced by a music reproduction block is mixed with a received voice signal for sounding. At the same time, a voice signal for transmission is mixed with the same tone signal to be transmitted through a communication block. Consequently, both the calling side and the called side can have a conversation while listening to a background music tone. This feature allows users to make telephone conversations livelier and, when a background tone suitable for a conversation is selected, forge a desired atmosphere of a conversation.

In addition, by use of the music reproduction block for reproducing a background tone, a ringing tone and a holding tone may be generated and outputted. The music reproduction block may be used in common. Further, the music reproduced by the music reproduction block may be shared by background tone, ringing tone, and holding tone.

Still further, a memory block for storing music data is arranged such that music data may be downloaded from an external personal computer and a network. This arrangement permits the reproduction of background tones, ringing tones, and holding tones in various types of music.

## Claims

1. A telephone terminal apparatus (1) operable to exchange forward and backward voice signals between a pair of parties for conversation, comprising:
a voice processing block (14) having a coder (46) that codes a forward voice signal, and a decoder (48) that decodes a backward voice signal;
a communication block (13) that transmits the forward voice signal, which is outputted from the coder (46) in a coded form, to the other party, and
that receives the backward voice signal from the other party in a coded form, which is inputted to the decoder (48);
a tone generating block (10) that processes music data to generate a music tone signal; and
a controlling block (10, 31) that operates when the music tone signal is set to sound a background music over the conversation for mixing the music tone signal generated by the tone generating block (10) with the backward voice signal, which is outputted from the decoder (48), and for mixing the music tone signal generated by the tone generating block (10) with the forward voice signal, which is inputted to the coder (46), wherein the controlling block (10, 31) operates when the music tone signal is set to sound a tringing tone at a call termination for controlling the tone generator block (10) to generate the music tone signal at the call termination.

2. The telephone terminal apparatus according to claim 1, wherein the controlling block (10, 31) selects a background music according to a telephone number of the other party so as to control the tone generating block (10) to generate a music tone signal of the selected background music.

3. The telephone terminal apparatus according to claim 1, wherein the controlling block (10, 31) operates when a conflict occurs in the setting of the background music between a calling party initiating the conversation and a called party for enabling the setting of the background music made by the calling party and disabling the setting of the background music made by the called party.

4. The telephone terminal apparatus according to claim 3, wherein the controlling block (10, 31) selects a ringing tone in response to a telephone number of the other party to audibly identify the other party.

5. The telephone terminal apparatus according to claim 1, wherein the controlling block (10, 31) operates when the music tone signal is set to sound a holding tone for controlling the tone generating block (10) to generate the music tone signal at a temporary holding of the conversation, and for feeding the generated music tone signal to the coder (46) so as to transmit the holding tone to the other party.

6. The telephone terminal apparatus according to claim 5, wherein the controlling block (10, 31) selects a holding tone according to a telephone number of the other party so as to control the tone generating block (10) to generate the music tone signal of the selected holding tone.

7. The telephone terminal apparatus according to claim 1, further comprising a memory block (11, 32) that stores the music data, wherein the communication block (13) can download the music data into the memory block (11, 32) from an external database (20).

8. The telephone terminal apparatus according to claim 1, wherein the controlling block (10, 31) can mute the music tone signal from either of the forward voice signal and the backward voice signal.

9. A method of operating a telephone terminal to exchange forward and backward voice signals between a pair of parties for conversation, the method comprising the steps of:
coding a forward voice signal, and decoding a backward voice signal;
transmitting the forward voice signal in a coded form to the other party, and receiving the backward voice signal from the other party in a coded form;
processing music data to generate a music tone signal; and mixing the music tone signal with the backward voice signal after the decoding thereof when the music tone signal is set to sound a background music over the conversation, and mixing the music tone signal with the forward voice signal before the coding thereof when the music tone signal is set to sound a background music over the conversation; and generating the music tone signal at a call termination when the music tone signal is set to sound a ringing tone at the call termination.

10. A machine readable medium for use in a telephone terminal apparatus (1) having a processor (10) to exchange forward and backward voice signals between a pair of parties for conversation, the medium containing program instructions executable by the processor (10) for causing the telephone terminal apparatus (1) to perform a method comprising the steps of:
coding a forward voice signal, and decoding a backward voice signal;
transmitting the forward voice signal in a coded form to the other party, and receiving the backward voice signal from the other party in a coded form;
processing music data to generate a music tone signal; and mixing the music tone signal with the backward voice signal after the decoding thereof when the music tone signal is set to sound a background music over the conversation, and mixing the music tone signal with the forward voice signal before the coding thereof when the music tone signal is set to sound a background music over the conversation; and generating the music tone signal at a call termination when the music tone signal is set to sound a singing tone at the call termination.

## Patentansprüche

1. Ein Telefonendgerät (1), das betrieben werden kann, um Gesprächssignale zur Konversation in der Vorwärts- und Rückwärtsrichtung zwischen einem Paar von Parteien auszutauschen, wobei das Telefonendgerät Folgendes aufweist:
einen Gesprächsverarbeitungsblock (14) mit einem Kodierer (46), der ein Gesprächssignal in der Vorwärtsrichtung kodiert, und einen Dekoder (48), der ein Gesprächssignal in der Rückwärtsrichtung dekodiert;
einen Kommunikationsblock (13) der das Gesprächssignal in der Vorwärtsrichtung, das von dem Kodierer (46) in einer kodierten Form ausgegeben wird, zu der anderen Partei sendet, und der das Gesprächssignal in der Rückwärtsrichtung von der anderen Partei in einer kodierten Form empfängt, das in den Dekodierer (48) eingegeben wird;
einen Tonerzeugungsblock (10), der Musikdaten verarbeitet, um ein Musiktonsignal zu erzeugen; und
einen Steuerblock (10, 31) der arbeitet, wenn das Musiktonsignal so eingestellt ist,
dass eine Hintergrundmusik über die Konversation gelegt wird, um das Musiktonsignal, das von dem Tonerzeugungsblock (10) erzeugt wurde, mit dem Gesprächssignal in der Rückwärtsrichtung zu mischen, das von dem Dekoder (48) ausgegeben wurde, und zum Mischen des Musiktonsignals, das von dem Tonerzeugungsblock (10) erzeugt wurde, mit dem Gesprächssignal in der Vorwärtsrichtung, das in den Kodierer (46) eingegeben wird, wobei der Steuerblock (10, 31) arbeitet, wenn das Musiktonsignal so eingestellt ist, dass es einen Klingelton am Ende eines Gesprächs wiedergibt, um den Tonerzeugungsblock (10) zu steuern, um das Musiktonsignal am Ende des Gesprächs zu erzeugen.

2. Das Telefonendgerät nach Anspruch 1, wobei der Steuerblock (10, 31) eine Hintergrundmusik auswählt entsprechend einer Telefonnummer der anderen Partei, um den Tonerzeugungsblock (10) zu steuern, um ein Musiktonsignal der ausgewählten Hintergrundmusik zu erzeugen.

3. Das Telefonendgerät nach Anspruch 1, wobei der Steuerblock (10, 31) arbeitet wenn ein Konflikt beim Einstellen der Hintergrundmusik zwischen einer anrufenden Partei, die die Konversation initiiert hat und einer angerufenen Partei auftritt, zur Freigabe der Einstellung der Hintergrundmusik, die von der anrufenden Partei gemacht wurde und zum Sperren der Einstellung der Hintergrundmusik, der angerufenen Partei.

4. Das Telefonendgerät nach Anspruch 3, wobei der Steuerblock (10, 31) einen Klingelton auswählt ansprechend auf eine Telefonnummer der anderen Partei, um hörbar die andere Partei zu identifizieren.

5. Das Telefonendgerät nach Anspruch 1, wobei der Steuerblock (10, 31) arbeitet, wenn das Musiktonsignal eingestellt ist um einen Halteton wiederzugeben zum Steuern des Tonerzeugungsblocks (10), um das Musiktonsignal bei einem temporären Halten der Konversation zu erzeugen, und zum Eingeben des erzeugten Musiktonsignals in den Kodierer (46), um den Halteton an die andere Partei zu senden.

6. Das Telefonendgerät nach Anspruch 5, wobei der Steuerblock (10, 31) einen Halteton auswählt, entsprechend einer Telefonnummer der anderen Partei, um den Tonerzeugungsblock (10) zu steuern, um das Musiktonsignal des ausgewählten Haltetons zu erzeugen.

7. Das Telefonendgerät nach Anspruch 1, wobei das Telefonendgerät ferner einen Speicherblock (11, 32) aufweist, der Musikdaten speichert, wobei der Kommunikationsblock (13) Musikdaten in den Speicherblock (11, 32) von einer externen Datenbank (20) herunterladen kann.

8. Das Telefonendgerät nach Anspruch 1, wobei der Steuerblock (11, 31) das Musiktonsignal des Gesprächssignals in der Vorwärtsrichtung oder des Gesprächssignals in der Rückwärtsrichtung stummschalten kann.

9. Ein Verfahren zum Betreiben eines Telefonendgerätes, um Gesprächssignale in der Vorwärts- und Rückwärtsrichtung zwischen einem Paar von Parteien zur Konversation auszutauschen, wobei das Verfahren die Folgenden Schritte aufweist:
Kodieren eines Gesprächssignals in der Vorwärtsrichtung, und Dekodieren eines Gesprächssignals in der Rückwärtsrichtung;
Senden des Gesprächssignals in der Vorwärtsrichtung in einer kodierten Form zu der anderen Partei und Empfangen des Gesprächssignals in der Rückwärtsrichtung von der anderen Partei in einer kodierten Form;
Verarbeiten von Musikdaten, um ein Musiktonsignal zu erzeugen; und
Mischen des Musiktonsignals mit dem Gesprächssignal in der Rückwärtsrichtung nach dem dekodieren desselben, wenn das Musiktonsignal eingestellt ist, um eine Hintergrundmusik über der Konversation wiederzugeben, und Mischen des Musiktonsignals mit dem Gesprächssignal in der Vorwärtsrichtung vor dem Kodieren desselben, wenn das Musiktonsignal eingestellt ist, um eine Hintergrundmusik über der Konversation wiederzugeben; und
Erzeugen des Musiktonsignals am Ende eines Gesprächs, wenn das Musiktonsignal eingestellt ist, um einen Klingelton am Ende eines Gesprächs wiederzugeben.

10. Ein maschinenlesbares Medium zur Verwendung in einem Telefonendgerät (1) mit einem Prozessor (10) zum Austauschen von Gesprächssignalen in der Vorwärts- und der Rückwärtsrichtung zwischen einem Paar von Parteien zur Konversation, wobei das Medium Programmanweisungen aufweist, die von dem Prozessor (10) ausgeführt werden können, um das Telefonendgerät (1) dazu zu veranlassen ein Verfahren auszuführen, das die Folgenden Schritte aufweist:
Kodieren eines Gesprächssignals in der Vorwärtsrichtung, und Dekodieren eines Gesprächssignals in der Rückwärtsrichtung;
Senden des Gesprächssignals in der Vorwärtsrichtung in einer kodierten Form zu der anderen Partei und Empfangen des Gesprächssignals in der Rückwärtsrichtung von der anderen Partei in einer kodierten Form;
Verarbeiten von Musikdaten, um ein Musiktonsignal zu erzeugen; und
Mischen des Musiktonsignals mit dem Gesprächssignal in der Rückwärtsrichtung nach dem Dekodieren desselben, wenn das Musiktonsignal eingestellt ist, um eine Hintergrundmusik über der Konversation wiederzugeben, und Mischen des Musiktonsignals mit dem Gesprächssignal in der Vorwärtsrichtung vor dem Kodieren desselben, wenn das Musiktonsignal eingestellt ist, um eine Hintergrundmusik über der Konversation wiederzugeben; und
Erzeugen des Musiktonsignals am Ende eines Gesprächs, wenn das Musiktonsignal eingestellt ist, um einen Klingelton am Ende eines Gesprächs wiederzugeben.

## Revendications

1. Terminal téléphonique (1) actionnable pour échanger des signaux vocaux direct et inverse entre deux partenaires en conversation, comprenant :
un bloc de traitement vocal (14) comportant un codeur (46) qui code un signal vocal direct, et un décodeur (48) qui décode un signal vocal inverse ;
un bloc de communication (13) qui transmet le signal vocal direct, qui est produit par le codeur (46) sous forme codée, vers l'autre partenaire, et qui reçoit de l'autre partenaire le signal vocal inverse sous forme codée, qui est introduit dans le décodeur (48) ;
un bloc de génération de sons (10) qui traite des données de musique pour générer un signal de son musical ; et
un bloc de commande (10, 31) qui opère lorsque le signal de son musical est réglé pour produire le son d'une musique de fond sur la conversation pour mélanger le signal de son musical généré par le bloc de génération de sons (10) avec le signal vocal inverse qui est produit par le décodeur (48), et pour mélanger le signal de son musical généré par le bloc de génération de sons (10) avec le signal vocal direct qui est introduit dans le codeur (46), le bloc de commande (10, 31) opérant lorsque le signal de son musical est réglé pour produire le son d'une tonalité de sonnerie au moment d'un aboutissement d'appel pour commander le bloc de génération de sons (10) pour générer le signal de son musical à l'aboutissement de l'appel.

2. Terminal téléphonique selon la revendication 1, dans lequel le bloc de commande (10, 31) sélectionne une musique de fond conformément à un numéro de téléphone de l'autre partenaire de façon à commander le bloc de génération de sons (10) pour générer un signal de son musical de la musique de fond sélectionnée.

3. Terminal téléphonique selon la revendication 1, dans lequel le bloc de commande (10, 31) opère lorsqu'un conflit survient dans l'établissement de la musique de fond entre un partenaire appelant initiant la conversation et un partenaire appelé, pour activer l'établissement de la musique de fond fait par le partenaire appelant et désactiver l'établissement de la musique de fond fait par le partenaire appelé.

4. Terminal téléphonique selon la revendication 3, dans lequel le bloc de commande (10, 31) sélectionne une tonalité de sonnerie en réponse à un numéro de téléphone de l'autre partenaire pour identifier de façon auditive l'autre partenaire.

5. Terminal téléphonique selon la revendication 1, dans lequel le bloc de commande (10, 31) opère lorsque le signal de son musical est réglé pour produire le son d'une tonalité de mise en attente pour commander le bloc de génération de sons (10) pour générer le signal de son musical au moment d'une mise en attente temporaire de la conversation, et pour fournir au codeur (46) le signal de son musical généré de façon à transmettre la tonalité de mise en attente à l'autre partenaire.

6. Terminal téléphonique selon la revendication 5, dans lequel le bloc de commande (10, 31) sélectionne une tonalité de mise en attente conformément à un numéro de téléphone de l'autre partenaire de façon à commander le bloc de génération de sons (10) pour générer le signal de son musical de la tonalité de mise en attente sélectionnée.

7. Terminal téléphonique selon la revendication 1, comprenant en outre un bloc de mémoire (11, 32) qui mémorise les données de musique, dans lequel le bloc de communication (13) peut télécharger les données de musique dans le bloc de mémoire (11, 32) à partir d'une base de données externe (20).

8. Terminal téléphonique selon la revendication 1, dans lequel le bloc de commande (10, 31) peut rendre silencieux le signal de son musical de l'un ou l'autre du signal vocal direct et du signal vocal inverse.

9. Procédé d'actionnement d'un terminal téléphonique pour échanger des signaux vocaux direct et inverse entre deux partenaires en conversation, le procédé comprenant les étapes suivantes :
coder un signal vocal direct et décoder un signal vocal inverse ;
transmettre le signal vocal direct sous forme codée vers l'autre partenaire et recevoir le signal vocal inverse provenant de l'autre partenaire sous forme codée ;
traiter des données de musique pour générer un signal de son musical ; et
mélanger le signal de son musical avec le signal vocal inverse après son décodage lorsque le signal de son musical est réglé pour produire le son d'une musique de fond sur la conversation, et mélanger le signal de son musical avec le signal vocal direct avant son codage lorsque le signal de son musical est réglé pour produire le son d'une musique de fond sur la conversation ; et générer le signal de son musical au moment d'un aboutissement d'appel lorsque le signal de son musical est réglé pour produire le son d'une tonalité de sonnerie à l'aboutissement de l'appel.

10. Support lisible par une machine pour utilisation dans un terminal téléphonique (1) comportant un processeur (10) pour échanger des signaux vocaux direct et inverse entre deux partenaires en conversation, le support contenant des instructions de programme exécutables par le processeur (10) pour amener le terminal téléphonique (1) à réaliser un procédé comprenant les étapes suivantes :
coder un signal vocal direct et décoder un signal vocal inverse ;
transmettre le signal vocal direct sous forme codée vers l'autre partenaire et recevoir le signal vocal inverse provenant de l'autre partenaire sous forme codée ;
traiter des données de musique pour générer un signal de son musical ; et
mélanger le signal de son musical avec le signal vocal inverse après son décodage lorsque le signal de son musical est réglé pour produire le son d'une musique de fond sur la conversation, et mélanger le signal de son musical avec le signal vocal direct avant son codage lorsque le signal de son musical est réglé pour produire le son d'une musique de fond sur la conversation ; et générer le signal de son musical au moment d'un aboutissement d'appel lorsque le signal de son musical est réglé pour produire le son d'une tonalité de sonnerie à l'aboutissement de l'appel.
